# FASCICULE DE BREVET EUROPEEN

(11) **EP 0 358 738 B1**
(45) Date de publication et mention de la délivrance du brevet: **13.04.1994**
(21) Numéro de dépôt: 89902264.4
(22) Date de dépôt: 30.01.1989
(51) Int. Cl.: B25J 19/06, B25J 9/10

(54) **MANIPULATEUR MECANIQUE A AXES MULTIPLES AVEC PROTECTION CONTRE SURCHARGES**
MEHRACHSIGER MECHANISCHER MANIPULATOR MIT ÜBERLASTSCHUTZ
MULTI-AXIS MECHANICAL MANIPULATOR WITH OVERLOAD PROTECTION

(30) Priorité: 23.02.1988 FR 8802280
(43) Date de publication de la demande: 21.03.1990
(73) Titulaire: S.O.P.A.P. S.A., F-75014 Paris (FR)
(72) Inventeur: FREYWISS, Eric, F-75014 Paris (FR)
(74) Mandataire: Gérardin, Robert Jean René
(86) Numéro de dépôt international: FR8900031
(87) Numéro de publication internationale: WO8908012

(56) Documents cités:
- GB-A- 2 189 769
- US-A- 4 514 616

## Description

L'invention concerne un manipulateur mécanique à axes multiples à course réglable et à protection totale contre les surcharges.

Il existe déjà une grande variété de manipulateurs mécaniques, sur deux ou trois axes, qui diffèrent principalement par le mécanisme d'indexage utilisé: came à globique, cames plates conjuguées et came cylindrique. Ce dernier moyen étant principalement réservé aux manipulateurs mécaniques sur trois axes.

Toutefois, ces mécanismes d'indexage, malgré les avantages indéniables qu'ils offrent : construction compacte, haute précision, vitesse de transfert élevée, accélération contrôlée, positionnement positif, réduction des temps morts, etc... présentent Les inconvénients liés à la rigidité, en effet :
- les mouvements sont figés : les déplacements linéaires et angulaires sont fixes et non réglables,
- les lois de mouvements sont choisies pour obtenir des conditions d'accélération et de décélération optimales : ce qui donne une vitesse maximum à mi-course,
- les arrêts à mi-course se traduisent par des chocs importants, car les mécanismes d'indexage sont, dans la plupart des cas, entraînés par un ensemble moteur,
- frein et réducteur à roue et vis sans fin.

Par ailleurs, en cas de blocage en position verrouillée de l'arbre de sortie, il y a risque de rupture des galets ou de la came, car ces derniers sont situés dans la zone d'arrêt de la came.

L'angle de pression came/galet est égal à zéro, or, en présence d'un couple, même faible, exercé sur l'arbre de came, les efforts sur les galets tendent vers l'infini.

Aussi, pour s'affranchir du risque de rupture, utilise-t-on habituellement des limiteurs de couple à déclenchement en cas de blocage, qui introduisent cependant les inconvénients suivants:
- après déclenchement, il faut rechercher la position initiale du plateau ou du bras manipulateur : ce qui exige une connaissance précise du matériel et entraîne souvent, de ce fait, un arrêt de production se traduisant par des pertes de productivité,
- lors du déclenchement, les masses en mouvement ne sont plus contrôlées et deviennent donc dangereuses, surtout pour les mouvements verticaux,
- le limiteur de couple à déclenchement doit être surveillé électriquement,
- en outre, ce limiteur de couple à déclenchement réduit la précision et son utilisation est, par conséquent, exclue pour des applications de haute précision d'indexage ou de positionnement.

On connaît déjà un dispositif de protection des manipulateurs mécaniques contre les surcharges, tel que celui décrit dans le brevet d'invention français FR-A-2.451.250, ayant pour objet un dispositif de manipulation de matériel, comportant deux cames à corps cylindrique, dont la seconde est associée à un galet monté de façon à pouvoir osciller autour d'un axe transversal à celui de la came, afin que, combiné à un moyen de désengagement en cas de surcharge, tel qu'un embrayage à ressorts, il puisse permettre un mouvement de la came concernée, sans qu'il soit accompagné d'un mouvement du moyen de préhension, lorsque celui-ci rencontre un obstacle. Toutefois, le moyen de désengagement utilisé (embrayage à ressorts fonctionnant en limiteur de couple) oblige à rechercher, après utilisation, la position initiale du bras manipulateur avec l'interruption de production que ce la suppose.

L'invention t'elle qu'elle est caractérisée dans les revendications vise à remédier aux inconvénients évoqués ci-dessus et à résoudre le problème consistant à créer un manipulateur mécanique à axes multiples offrant des possibilités de réglage de course, et une protection totale contre les surcharges, sans perdre les avantages de fiabilité du système mécanique.

Les avantages obtenus grâce à cette invention consistent essentiellement en ceci que la précision d'arrêt obtenue est très fiable, le limiteur de couple à friction d'entraînement du mécanisme d'indexation étant réglé à deux ou trois fois le couple nécessaire pour accélérer et freiner, il ne glisse seulement que lors d'un arrêt intermédiaire, là où son couple de tarage est dépassé; chaque mouvement a son propre limiteur à friction avec réglage fin facile et accessible, le réducteur à roue et vis sans fin d'entraînement est à jeu réduit, et chaque point d'arrêt dispose d'une came de commande réglable.

La protection est totale, puisque les inconvénients des limiteurs à déclenchement, ci-dessus évoqués, sont éliminés ; le bras de manipulation s'efface lorsqu'il rencontre des obstacles et le limiteur de couple à friction d'entraînement de la came cylindrique est réglé au dessus du couple d'effacement du bras de manipulation.

D'autres caractéristiques et avantages apparaîtront dans la description qui va suivre d'un manipulateur mécanique à trois axes réalisé selon l'invention, donné à titre d'exemple non limitatif au regard des dessins annexés représentant :
- Fig. 1 : une vue d'ensemble, en perspective, du manipulateur,
- Fig. 2 : une vue en perspective du boîtier à ressorts,
- Fig. 3 : une vue de côté, en coupe partielle, du bras de manipulation,
- Fig. 4 : un graphique donnant la vitesse et l'accélération en fonction du déplacement, sur un cycle.

Les dessins représentent un manipulateur mécanique à axes multiples, à course réglable et à protection totale contre les surcharges, constitué essentiellement d'un mécanisme d'indexage **10** entraîné par la combinaison d'un moteur-frein **2**, d'un réducteur à roue et vis sans fin **30**, et d'un limiteur de couple réglable **40**; le mécanisme d' indexage **10** étant relié, par l'intermédiaire d'un boîtier à ressorts **50**, à un bâti tournant **56**. Une came cylindrique verticale **6** assure le déplacement vertical d'un bras manipulateur **7** par l'intermédiaire d'un galet **8**, d'un coulisseau **9**, d'une embase creuse **7a**, d'un axe fileté **22**, d'un ressort **23**, d'une rondelle **24** et d'un écrou **25** ; l'entraînement en rotation de la came cylindrique **6** est obtenu par l'intermédiaire d'un moteur-frein **26**, d'un réducteur **27** et d'un limiteur de couple réglable **28**. Une butée **55** limite le débattement angulaire du bras manipulateur **7**.

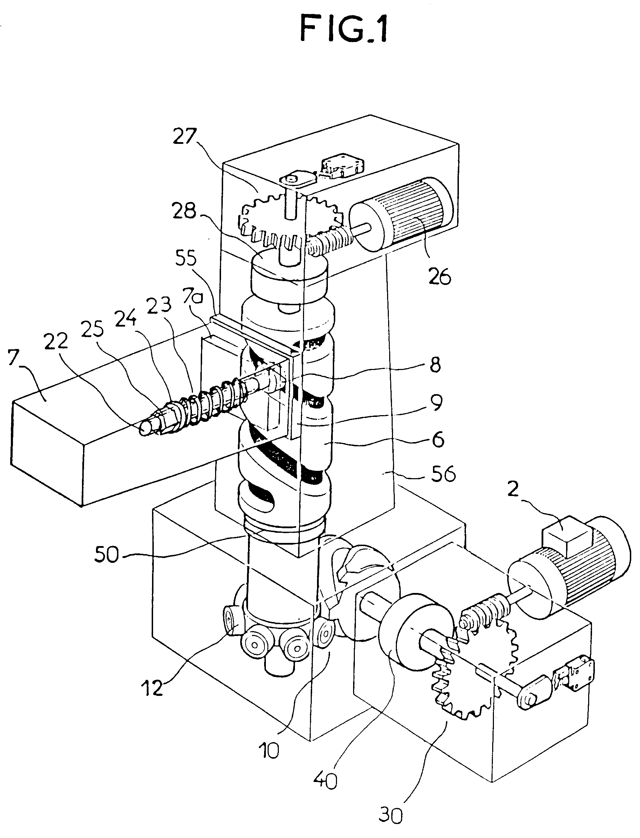

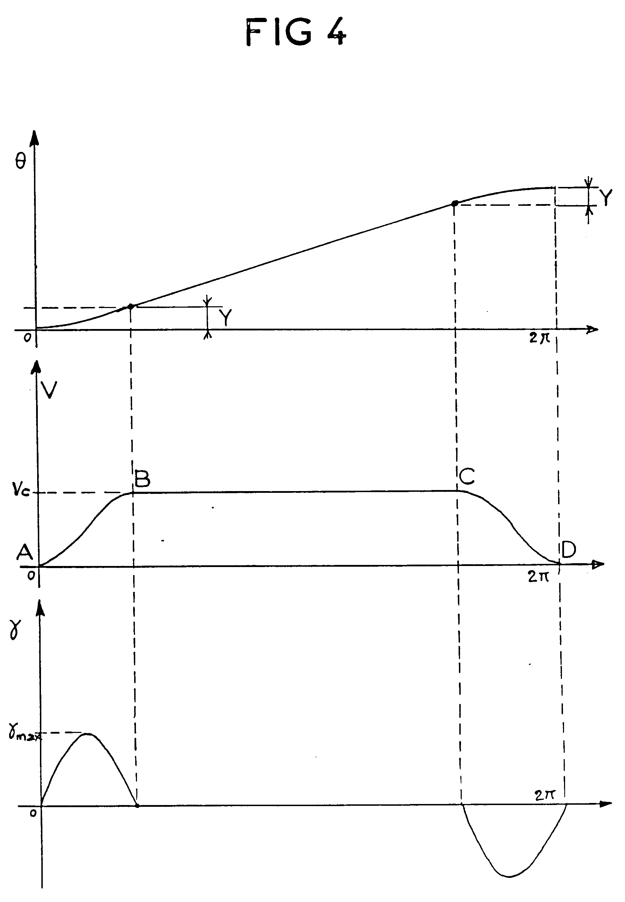

En examinant les figures 1 et 4, la course téta du manipulateur est obtenue par la combinaison du moteur-frein **2**, du réducteur à roue et vis sans fin **30**, du limiteur de couple réglable **40**, du mécanisme d'indexage **10** et du boîtier à ressorts **50** solidaire du bâti tournant **56**, en utilisant une loi de mouvement **A**, **B**, **C**, **D**, fonction de l'angle de rotation sur un tour, reproduite sur le mécanisme d'indexage **10** ou sur la came cylindrique **6**, permettant d'obtenir une grande plage **BC** à vitesse constante **Vc**.

Le fait de disposer d'une vitesse constante **Vc** sur une grande plage **BC** permet d'utiliser une inclinaison de nervures plus faibles d'où une meilleure irreversibilité avec le réducteur et le moteur-frein: ce qui présente beaucoup d'intérêt.

Il est ainsi possible de marquer des arrêts dans les plages **AB**, **BC** et **CD**. Les arrêts réalisés dans la plage **BC**, à vitesse constante **Vc**, se caractérisent par une constance de la précision d'arrêt, car ils s'effectuent toujours dans les mêmes conditions. Dans les plages **AB** et **CD** les arrêts varient à contrario d'un point à un autre ; les conditions d'arrêt en ces points varient donc également, ce qui signifie que la précision d'arrêt est variable.

Cependant, dans une majorité d'application, cette précision est largement suffisante pour de nombreux appareils de ce type ; d'autant qu'il existe des cas où il est nécessaire de marquer un arrêt intermédiaire d'attente, pour des raisons de sécurité ou pour réduire le temps d'approche.

Le réglage du point d'arrêt et, par suite, de la course, s'effectue par simple réglage de came, chaque point d'arrêt disposant d'une came de commande. Pour trois points d'arrêt , par exemple, la came cylindrique fait plusieurs tours pour réaliser la course maximum.

Pour une rotation angulaire à deux points d'arrêt du mécanisme d'indexage, par exemple, il est nécessaire d'utiliser deux cames de commande.

Quant à la protection totale du manipulateur, dont les mouvements sont obtenus par l'intermédiaire des mécanismes précités, elle est réalisée par la combinaison d'un limiteur de couple **40** pour l'entraînement du mécanisme d'indexage **10**, du boîtier à ressorts **50**, situé entre le mécanisme d'indexage **10** et le bâti tournant **56**, et de l'embase creuse **7a** à ressort à tension réglable **23** par l'intermédiaire de son axe fileté **22**, d'une rondelle **24** et d'un écrou **25**.

En effet, si l'on se reporte, à nouveau, aux figures **1** et **4**, on remarque qu'un mouvement intermittent rotatif n'est protégé par le limiteur de couple à friction **40**, situé en amont du mécanisme d'indexage **10**, que dans la plage à vitesse constante **BC**, puisque, dans les parti es **AB** et **CD**, l'angle de pression entre galets et came est faible, il est égal à zéro aux points **A** et **D**.

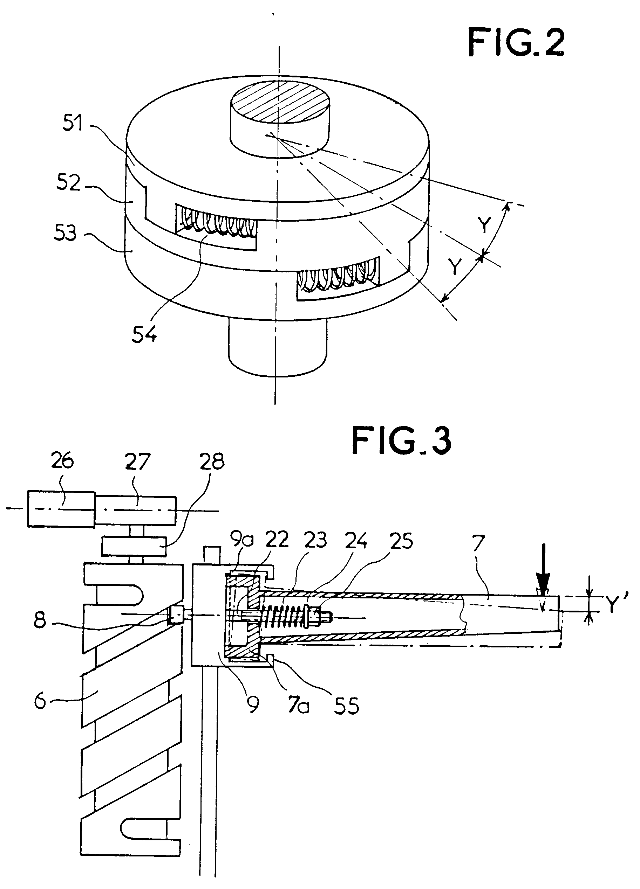

Aussi, pour éviter la rupture des galets **12** du mécanisme **10**, dans les parties **AB** et **CD** à accélération gamma maximum, le boîtier à ressorts **50 (fig.2)** est-il placé entre le mécanisme **10** et le bâti tournant **56**, afin que, en cas de blocage du bras de manipulation **7**, le mécanisme d'indexage puisse effectuer un déplacement **Y** permettant de franchir le point **B** ou le point **C** pour atteindre la plage à vitesse constante **BC**.

Si l'on se reporte à la figure 2, on remarque que, en effet, le boîtier à ressorts **50**, assurant la liaison entre le mécanisme d'indexage **10** et le bâti tournant **56**, comporte trois parties **51**, **52** et **53** empilées l'une sur l'autre et imbriquées l'une dans l'autre, avec un certain angle **Y** de liberté maximum de débattement en rotation déterminé, dans un sens comme dans l'autre, par des ressorts précomprimés **54**.

Si l'on se reporte maintenant à nouveau aux figures 1 et 3, on remarque que, en cas de blocage du bâti tournant **56** par entrée en contact du bras manipulateur **7** avec un obstacle, ce dernier s'efface angulairement, momentanément, par l'intermédiaire de l'embase creuse **7a** à ressort **23**, par basculement latéral autour d'une arête, dans l'empreinte **9a** du coulisseau **9**, jusqu'à entrée en contact éventuel avec la butée **55**.

Le débattement **Y**' est limité par la butée mécanique **55** et le limiteur de couple supérieur **28** assure la protection du galet **8** et de la came cylindrique **6**, car nous nous trouvons, dans ce cas, dans la partie **BC** d'angle de pression maximum.

Il en est de même lorsque, lors d'un mouvement vertical vers le haut, le bras manipulateur **7** rencontre un obstacle, puisque celui-ci s'incline alors, comme représenté en trait mixte sur la figure **3**, pour permettre au galet d'entraînement **8** de terminer sa course s' il se trouve dans les parties **AB** ou **CD** de la came. Dans ce cas, aussi, le limiteur de couple supérieur **28** intervient pour stopper l'entraînement de la came horizontale **6** pour un déplacement vertical **Y**' du bras, si le galet d'entraînement **8** n'a pas terminé sa course.

La protection est donc totale, puisqu'assurée à deux niveaux par l'intermédiaire des limiteurs de couple **28** et **40**, du boîtier à ressorts **50** et de l'embase creuse **7a** à ressort **23**.

Selon un mode de réalisation simplifié du manipulateur, le système de protection n'est constitué que du limiteur de couple inférieur **40** et du boîtier à ressorts **50** pour les tables d'indexage, et de l'embase creuse **7a** à ressort **23** et des limiteurs de couple **28** et **40** pour les manipulateurs à axes multiples.

Le manipulateur selon l'invention est destiné principalement au chargement, au transfert et au déchargement de pièces de toute nature.

## Revendications

1. Manipulateur mécanique à axes multiples et à course réglable comportant un bâti tournant, par l'intermédiaire d'un moteur frein, d'un réducteur à roue et vis sans fin, d'un limiteur de couple et d'un mécanisme d'indexage à loi de mouvement prédéterminée, par rapport auquel se déplace un bras manipulateur par l'intermédiaire d'un galet combiné à un dispositif de protection contre les surcharges , d'une came cylindrique à rotation commandée par un moto-réducteur à roue et vis sans fin relié au bâti tournant, avec interposition d'un limiteur de couple, caractérisé en ce que les limiteurs de couple **(28,40)** sont réglables, en ce que la loi de mouvement du mécanisme d'indexage **(10)** est déterminée pour obtenir une vitesse constante sur une large plage **(BC)**, avec points d'arrêts éventuels, en ce que le bâti tournant **(56)** est relié à son mécanisme d'indexage **(10)** par l'intermédiaire d'un boîtier à ressorts **(50)**, et en ce que le dispositif de protection contre les surcharges, combiné au galet d'entraînement du bras manipulateur **(7)**, est constitué d'une platine à ressorts permettant un effacement angulaire momentané du bras **(7)** lorsque celui-ci rencontre un obstacle.

2. Manipulateur selon la revendication 1, caractérisé en ce que les limiteurs de couple réglables **(28,40)**, transmettant, respectivement, le mouvement à la came cylindrique **(6)** et au mécanisme d'indexage **(10),** sont des limiteurs à friction à ressorts à effort réglable, directement ou à distance, par l'intermédiaire de vérins.

3. Manipulateur selon la revendication 1, caractérisé en ce que le boitier à ressorts **(50)**, assurant la liaison entre le bâti tournant **(56)** et le mécanisme d'indexage **(10),** est réalisé en trois parties **(51,52** et **53)**, empilées l'une sur l'autre et imbriquées l'une dans l'autre, avec un certain débattement **Y** de liberté en rotation l'une par rapport à l'autre, déterminé par des ressorts **(54)** dont la flèche est fonction du couple transmis au boîtier.

4. Manipulateur selon la revendication 1, caractérisé en ce que la platine à ressorts à tension réglable, permettant l'effacement angulaire du bras **(7)** lorsqu'il rencontre un obstacle, est constituée d'une embase creuse **(7a)** plaquée dans une empreinte **(9a)** aménagée sur le coulisseau porte-bras **(9)** par l'intermédiaire d'un axe fileté implanté dans le coulisseau porte-bras **(9)** sur lequel est monté un ressort **(23)** prenant appui contre l'embase creuse **(7a)** et contre la face avant d'un dispositif de mise en tension du ressort **(23)**.

5. Manipulateur selon la revendication 4, caractérisé en ce que le dispositif de mise en tension du ressort **(23)** de la platine est constitué d'une rondelle **(24)** et d'un écrou **(25)**.

6. Manipulateur selon la revendication 4, caractérisé en ce que le débattement angulaire du bras **(7)** est limité par une butée mécanique **(55)**.

## Claims

1. Mechanical manipulator with multiple axes and variable displacement containing a stand which rotates by means of a brake motor, a worm-and-wheel reduction gear, a torque limiter and an indexing mechanism with a pre-determined motion set-up, relative to which a manipulator arm moves by means of a roller combined with an overload protection device, a rotatable cylindrical cam controlled by a worm-and-wheel geared motor connected to the rotating stand, with an interposed torque limiter, characterized in that the torque limiters (28,40) are adjustable, in that the motion set-up of the indexing mechanism (10) is determined so as to obtain a constant speed over a large range (BC), with optional stopping points, in that the rotating stand (56) is connected to its indexing mechanism (10) via a spring bushing (50), and in that the overload protection device, combined with the drive roller of the manipulator arm (7), is constituted by spring plate allowing a momentary discontinuation of the angular movement of the arm (7) when this meets an obstacle.

2. Manipulator according to claim 1, characterized in that the adjustable torque limiters (28, 40) transmitting, movement respectively to the cylindrical cam (6) and to the indexing mechanism (10), are friction limiters with springs, the tension of which is adjustable either directly or at a distance, by means of screws.

3. Manipulator according to claim 1, characterized in that the spring bushing (50) which enables the connection between the rotating stand (56) and the indexing mechanism (10), is manufactured in three parts (51, 52 and 53), stacked one on top of the other and imbricated one in the other, with a certain displacement Y of rotational freedom one relative to the other, determined by the springs (54) the deflection of which is a function of the torque transmitted to the bushing.

4. Manipulator according to claim 1, characterized in that the adjustable tension spring plate, allowing the discontinuation of angular movement of the arm (7) when it meets an obstacle, is constituted by a hollow seating (7a) pressed into a recess (9a) provided on the arm-holding slide (9) by means of of a threaded spindle mounted within the arm-holding slide (9) on which a spring (23) is mounted which presses against the hollow seating (7a) and the front face of a device for tensioning the spring (23).

5. Manipulator according to claim 4, characterized in that the device for tensioning the spring (23) of the plate is constituted by a washer (24) and a nut (25).

6. Manipulator according to claim 4, characterized in that the angular displacement of the arm (7) is limited by a mechanical stop (55).

## Patentansprüche

1. Mehrachsiger mechanischer Manipulator mit einstellbarem Hub, bestehend aus einem Drehgestell, das mittels eines Verschiebeläufermotors, eines Rad- und Schneckengetriebes, eines Drehmomentbegrenzers und eines Indexiermechanismus mit vorab festgelegter Bewegungsgleichung dreht, und zu dem sich ein Manipulatorarm mittels einer mit einer Überlastungsschutzvorrichtung kombinierten Rolle, eines Nockenzylinders, dessen Drehbewegung von einem mit dem Drehgestell verbundenen Rad- und Schnecken-Getriebemotor gesteuert wird, bewegt, wobei ein Drehmomentbegrenzer dazwischen angeordnet ist, dadurch gekennzeichnet, daß die Drehmomentbegrenzer (28, 40) einstellbar sind, daß die Bewegungsgleichung des Indexiermechanismus (10) festgelegt ist, um eine gleichbleibende Geschwindigkeit über einen großen Bereich (BC), eventuell mit Haltepunkten, zu erhalten, daß das Drehgestell (56) über ein Federgehäuse (50) mit seinem Indexiermechanismus (10) verbunden ist, und daß die Überlastungsschutzvorrichtung, die mit der Antriebsrolle des Manipulatorarms (7) kombiniert ist, von einer Federplatte gebildet wird, die ein momentanes winkelmäßiges Ausweichen des Arms (7) ermöglicht, wenn dieser gegen ein Hemmnis stößt.

2. Manipulator nach Anspruch 1,
dadurch gekennzeichnet, daß die Drehmomentbegrenzer (28, 40), die die Bewegung zum Nockenzylinder (6) bzw. zum Indexiermechanismus (10) übertragen, Federreibungsbegrenzer sind, deren Kraft direkt oder aus der Entfernung mit Verstellschrauben einstellbar sind.

3. Manipulator nach Anspruch 1,
dadurch gekennzeichnet, daß das Federgehäuse (50), das die Verbindung zwischen dem Drehgestell (56) und dem Indexiermechanismus (10) gewährleistet, in drei Teilen (51, 52 und 53) ausgeführt ist, die übereinanderliegen und mit einer bestimmten Drehfreiheits-Verschiebbarkeit Y zueinander ineinander verzahnt sind, die durch Federn (54) bestimmt wird, deren Pfeilhöhe Funktion des auf das Gehäuse übertragenen Drehmoments ist.

4. Manipulator nach Anspruch 1,
dadurch gekennzeichnet, daß die spannungsverstellbare Federplatte, die das winkelmäßige Ausweichen des Arms (7) ermöglicht, wenn dieser gegen ein Hemmnis stößt, von einem hohlen Fuß (7a) gebildet wird, der in einer Vertiefung (9a) an dem gleitenden Armhalter (9) mittels einer in dem gleitenden Armhalter (9) eingesetzten Gewindeachse festgesetzt wird, auf der eine Feder (23) sitzt, die an dem hohlen Fuß (7a) und an der Vorderseite einer Vorrichtung zum spannen der Feder (23) in Anlage kommt.

5. Manipulator nach Anspruch 4,
dadurch gekennzeichnet, daß die Vorrichtung zum Spannen der Feder (23) der Platte von einer Scheibe (24) und einer Mutter (25) gebildet wird.

6. Manipulator nach Anspruch 4,
dadurch gekennzeichnet, daß das winkelmäßige Ausweichen des Arms (7) von einem mechanischen Anschlag (55) begrenzt wird.
